# EUROPÄISCHE PATENTANMELDUNG

(11) **EP 2 995 579 A1**
(43) Veröffentlichungstag der Anmeldung: **16.03.2016**
(21) Anmeldenummer: 15184372.9
(22) Anmeldetag: 09.09.2015
(51) Int. Cl.: B65G 1/04, B65G 1/06, B65D 83/00

(54) **KOMMISSIONIEREINRICHTUNG**

(30) Priorität: 09.09.2014 DE 102014112994
(71) Anmelder: Brandmüller, Ludwig, 83026 Rosenheim (DE)
(72) Erfinder: Brandmüller, Ludwig, 83026 Rosenheim (DE)
(74) Vertreter: Winter, Brandl, Fürniss, Hübner, Röss, Kaiser, Polte - Partnerschaft mbB

(57) **Zusammenfassung**

Offenbart ist eine Kommissioniereinrichtung mit Regalen (2), die eine Vielzahl von Regalfächern (4) haben. Zur Entnahme oder Übergabe von Waren sind diese Regalfächer (4) der Regale (2) über ein Shuttlefahrzeugsystem anfahrbar. Erfindungsgemäß hat dieses Shuttlefahrzeugsystem zumindest ein Transportshuttle (8), das entlang der Längsachse der Regale (2) verfahrbar ist. Das Shuttlefahrzeugsystem hat des Weiteren noch Querwagen (10, 12) oder ähnliche Transportmittel, die quer zur Längserstreckung der Regale (2) verlaufen und über die Übergabe-Regalfächer (4) der Regale (2) anfahrbar sind.

## Beschreibung

Die Erfindung betrifft eine Kommissioniereinrichtung gemäß dem Oberbegriff des Patentanspruchs 1.

Zur Optimierung von Lagerlogistikprozessen werden zunehmend vollautomatische Kommissionierungskonzepte realisiert.

Bekannt sind Kommissioniersysteme, bei denen die Gebinde sortenrein angeliefert werden und dann über Vereinzelungsanlagen lageweise oder als Einzelgebinde auf Tablare aufgesetzt werden. Diese beladenen Tablare werden dann mittels einer aufwendigen Fördereinrichtung, beispielsweise bestehend aus einer Vielzahl von angetriebenen Rollen, auf denen die Tablare abrollen zu einem Tablarlager gefördert und dort mittels Regalbediengeräten eingelagert.

Die automatische Kommissionierung erfolgt bei dieser bekannten Lösung außerhalb des Tablarlagers. Hierzu werden die entsprechenden Tablare sequenzgerecht von den Regalbediengeräten ausgelagert, die Gebinde in der benötigten Anzahl von den Tablaren abgenommen, vereinzelt und über lange Förderstrecken einer Palettierstation in der Packreihenfolge zugeführt. Diese Packreihenfolge wird in Abhängigkeit vom Auftrag durch einen Packmustergenerator generiert.

Die "angebrochenen" Resttablare werden dann ggf. wieder in das Tablarlager rückgelagert.

Ein Problem derartiger Lösungen ist, dass zum Einen ein ganz erheblicher Aufwand für die Bereitstellung, Lagerung und Aufbereitung der Tablare erforderlich ist. Sehr aufwendig sind auch die Fördereinrichtungen, die erforderlich sind, um die Tablare in das Tablarlager zu verbringen und von dort zur Kommissionierstation zu fördern.

Des Weiteren kommt es bei diesen Anlagen relativ häufig zu Störungen an den Ein-/Ausschleusstellen und Eckumsetzungen durch unstabile beziehungsweise labile Gebinde, so dass die entsprechende Förderstrecke blockiert ist. Diese Störungen müssen dann von Hand beseitigt werden und führen zu einem "Sequenzbruch" an der Palettierstation, so dass trotz Automatisierung ein vergleichsweise hoher Personalaufwand erforderlich ist.

In der DE 10 2013 100 048 A1 ist eine Kommissioniereinrichtung gezeigt, bei der ein Regalsystem über eine Vielzahl von Shuttlefahrzeugen bedient wird. Diese Shuttlefahrzeuge sind mit Lastaufnahmemitteln versehen, deren Ausfahrweg in Abhängigkeit von Art, Anzahl oder Abmessungen des Gutes weitestgehend frei steuerbar ist. Auf diese ist es möglich, dass Mischgebinde auf den Lastaufnahmemitteln der Shuttle aufgenommen und diese zum Einlagern oder Kommissionieren an weitere Stationen übergeben werden können. Die Kommissionierung erfolgt bei einem derartigen System direkt am Regalfach.

Diese Kommissioniereinrichtung ist besonders vorteilhaft bei großen Zentrallagern von Konzernen einsetzbar, bei denen ein hoher Warenumschlag pro Tag zu erwarten ist, so dass die vergleichsweise hohen Investitionskosten für die Shuttles sehr schnell amortisiert sind. Für kleinere Systeme kann der Aufwand zu groß sein.

Der Erfindung liegt dem gegenüber die Aufgabe zugrunde, eine einfach aufgebaute Kommissioniereinrichtung zu schaffen.

Diese Aufgabe wird durch eine Kommissioniereinrichtung mit den Merkmalen des Patentanspruchs 1 gelöst.

Vorteilhafte Weiterbildungen der Erfindung sind Gegenstand der Unteransprüche.

Die erfindungsgemäße Kommissioniereinrichtung hat eine Vielzahl von Regalen, die parallel zueinander aufgestellt sind, wobei zwischen zwei benachbarten Regalen Fahrräume vorgesehen sind. Jedes Regal hat eine Vielzahl von Regalfächern, die über ein Shuttlefahrzeugsystem zur Entnahme oder Übergabe von Gütern anfahrbar sind. Dabei werden die Güter von Lastaufnahmemitteln des Shuttlefahrzeugsystems getragen. Erfindungsgemäß hat das Shuttlefahrzeugsystem eine Vielzahl von Querfördereinrichtungen, insbesondere Querwagen, mittels derer die Güter quer zu den Regalen und zu den Fahrräumen verfahrbar sind und die derart ausgestaltet sind, dass Übergabe-Regalfächer der Regale anfahrbar sind, um mit Gütern beladene Tablare / Paletten zu übergeben oder aus diesem Regalfach zu entnehmen. Diese Übergabe-Regalfächer sind erfindungsgemäß auch mittels Transportshuttles des Shuttlefahrzeugsystems anfahrbar, die im Bereich der Fahrräume geführt sind.

Erfindungsgemäß werden somit die Güter zum Einen über die Querfördereinrichtungen, beispielsweise Querwagen zu den Übergabe-Regalfächern der Regale transportiert bzw. von dort abgeholt - die eigentliche Verteilung im jeweiligen Regal erfolgt über die Transportshuttles, die entlang der Fahrräume geführt sind. Durch diese Zweiteilung des Shuttlefahrzeugsystems in eine Vielzahl von Transportshuttles und eine weitere Vielzahl von Querfördereinrichtungen, insbesondere Querwagen ist zum Einen die Steuerung des Shuttlefahrzeugsystems relativ einfach, da jede Einheit (Transportshuttle/Querwagen) nur bestimmte Fahrwege abdeckt und somit eine komplexe Steuerung nicht erforderlich ist. Des Weiteren kann der Aufbau der Einheiten relativ kompakt gehalten werden, so dass die Investitionskosten bei vergleichbarer Leistung gering sind.

Bei einem besonders bevorzugten Ausführungsbeispiel werden die Querwagen unterhalb der in den Regalen oder Regalabschnitten unten liegenden Regalfächern verfahren, um die Übergabe-Regalfächer anzufahren. Dem entsprechend werden die Güter dann von diesen Übergabe-Regalfächern mittels der Transportshuttles im jeweiligen Regal verteilt oder von der Regalfläche weg zur Übergabe zu den Übergabe-Regalfächen gefördert.

Dabei können die Querwagen auch paarweise angeordnet werden, so dass beispielsweise zwei Querwagen gemeinsam eine Palette oder ein Tablar tragen.

Die Führung der Transportshuttles ist besonders einfach, wenn diese jeweils an zwei benachbarten Regalen geführt sind. Dem entsprechend erstreckt sich die Führung entlang der Fahrräume zwischen zwei parallelen Regalen.

Zur Führung können dabei Führungsschienen für ein Fahrgestell der Transportshuttles vorgesehen sein.

Bei einem besonders flexiblen Ausführungsbeispiel trägt dieses Fahrgestell eine Hubeinrichtung für zumindest ein Lastaufnahmemittel. Diese Hubeinrichtung ist so ausgebildet, dass das Lastaufnahmemittel aus einer durch die Führung/Führungsschienen des Transportshuttles vorgegebenen Ebene in darunter und/oder darüberliegende Regalebenen, insbesondere auch zu zumindest einem Übergabe-Regalfach verfahrbar sind.

Die Kommissioniereinrichtung kann besonders einfach aufgebaut werden wenn die Führungsschienen im Bereich einer Regalebene angeordnet sind, die etwa mittig im Bezug auf die Höhenerstreckung der Regale liegt.

Die Hubeinrichtung des Transportshuttles kann als Teleskopmast, ähnlich wie bei einem Gabelstapler, ausgeführt sein, der das Lastaufnahmemittel trägt und über den jede Regalebene eines Regals in Vertikalrichtung erreichbar ist.

Mit anderen Worten gesagt, die Transportshuttles sind bei einer bevorzugten Lösung so ausgelegt, dass jedes Regalfach jeder Regalebene eines Regals erreichbar ist.

Die Querwagen werden vorzugsweise wesentlich einfacher ausgebildet. Dabei sind diese mit einem Hubelement ausgeführt, das so ausgelegt ist, dass dessen Lastaufnahmemittel zumindest zwischen einer Fahrebene des Querwagens und der benachbarten Regalebene bewegbar sind. D. h., die Querwagen fahren unterhalb von Regalfächern quer zu der Regallängserstreckung, wobei die Übergabe der Güter von bzw. zu den Übergabe-Regalfächern durch Anheben des Lastaufnahmemittels in die Ebene der Übergabe-Regalfächer erfolgt.

Um etwas Raum für die Querwagen zu schaffen, kann beispielsweise im Bereich der Fahrwege der Querwagen bodenseitig jeweils ein Regalfach des Regals weggelassen werden, so dass die Übergabe an ein darüber liegendes Regalfach oder in der gleichen Ebene benachbarte Regalfächer erfolgen kann.

Der Querwagen ist besonders einfach aufgebaut, wenn das Hubelement zur Höhenverstellung der Lastaufnahmemittel als Scherenhubtisch ausgebildet ist.

Der Antrieb dieses Scherenhubtischs kann bei einer Variante mittels einer schubsteifen Kette erfolgen.

Die Güter können als sortenreine Gebinde oder als Mischgebinde auf Tablaren angeordnet werden.

Bei sehr empfindlichen Gütern, bei denen ein Flüssigkeitsaustritt zu befürchten ist, beispielsweise bei Obst, können die Tablare mit einem Dichtrand ausgebildet sein, der verhindert, dass die Flüssigkeit vom Tablar abläuft. Zur Übergabe des Gutes kann dann ein Tablarboden des Tablars über eine geeignete Einrichtung über den Dichtrand angehoben werden.

Die Umschlagsleistung der Kommissioniereinrichtung lässt sich erhöhen, wenn die Querwagen oder die Transportshuttles jeweils mit mehr als einem individuell ansteuerbarem Lastaufnahmemittel ausgeführt sind. Bei diesem Ausführungsbeispiel kann somit eine Einheit (Querwagen/Transportshuttle) zwei unterschiedliche Tablare tragen. Prinzipiell ist es auch möglich, ein großes Tablar über die beiden synchron gesteuerten Lastaufnahmemittel zu bewegen.

Bei einem bevorzugten Ausführungsbeispiel der Erfindung sind die Lastaufnahmemittel der Querwagen als Tragplatte ausgebildet.

Bei einer Variante der Erfindung ist es vorgesehen, die Be- und Entladestationen der Kommissioniereinrichtung so anzuordnen, dass sie mittels der Querwagen anfahrbar sind. D. h., der Transport der Güter zwischen den Be- und Entladestationen sowie dem Regalsystem erfolgt im Wesentlichen über die Querwagen, wobei die Verteilung auf die Regale dann mittels der Transportshuttles erfolgt.

Die Führung der Querwagen ist besonders einfach, wenn diese schienengeführt sind.

Bevorzugte Ausführungsbeispiele der Erfindung werden im Folgenden anhand schematischer Zeichnungen näher erläutert. Es zeigen:
Figur 1 einen Grundriss eines Erdgeschosses einer mit zwei Ebenen ausgeführten Kommissioniereinrichtung;
Figur 2 ein Obergeschoss der Kommissioniereinrichtung gemäß Figur 1;
Figur 3 einen Schnitt entlang der Linie B-B in Figur 2;
Figur 4 einen Schnitt entlang der Linie A-A in Figur 2;
Figur 5 eine 3D-Detaildarstellung der Kommissioniereinrichtung gemäß den Figuren 1 bis 4;
Figur 6 die Ansicht gemäß Figur 5 aus einem anderen Blickwinkel;
Figur 7 ein Transportshuttle gemäß den Figuren 5 und 6;
Figur 8 einen Querwagen gemäß den Figuren 5 und 6 und
Figuren 9, 10 ein Tablar zur Aufnahme von in der erfindungsgemäßen Kommissioniereinrichtung zwischenzulagernden Güter.

Die im Folgenden beschriebene Kommissioniereinrichtung ist beispielsweise Teil eines Standardlagers einer Verbrauchermarktkette von dem aus die Waren an die einzelnen Verbrauchermärkte verteilt werden.

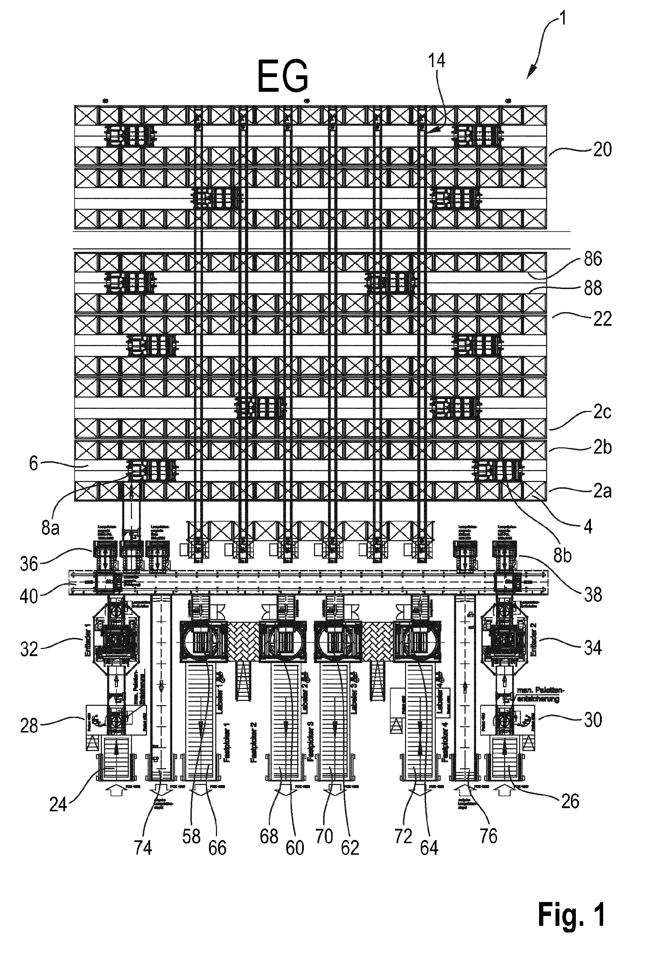

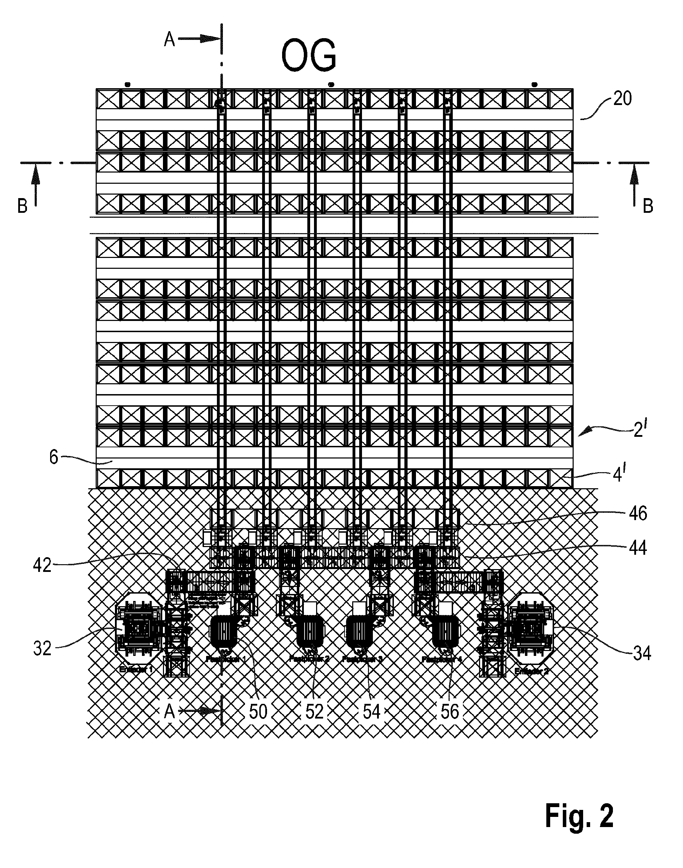

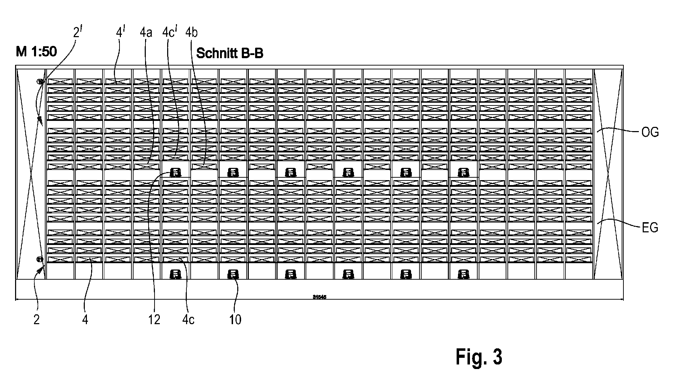

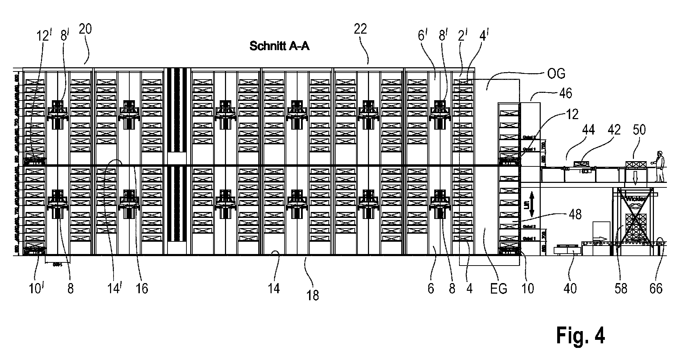

Ein derartiges Standardlager hat üblicher Weise einen Wareneingang und einen Warenausgang sowie Lagerräume für ein Trockensortiment, Fleisch, Tiefkühlkost sowie eine Obst- und Gemüsehalle. Jeder dieser Bereiche kann in der im Folgenden beschriebenen Weise als Kommissioniereinrichtung ausgeführt sein. Bei den folgenden Ausführungen ist vorausgesetzt, dass die Obst- und Gemüsehalle mit der Kommissioniereinrichtung ausgeführt ist. Eine derartige Obst- und Gemüsehalle hat üblicherweise zwei Temperaturbereiche zur optimalen Lagerung der unterschiedlichen Sorten. Bei dem im Folgenden beschriebenen Ausführungsbeispiel ist die Obst- und Gemüsehalle mit zwei Ebenen, einem Erdgeschoss und einem Obergeschoss dargestellt. Die entsprechenden Grundrisse sind in den Figuren 1 und 2 gezeigt. Die Figuren 3 und 4 zeigen die Kommissioniereinrichtung in den Schnitten B-B und A-A gemäß Figur 2.

Die als Obst- und Gemüsehalle realisierte Kommissioniereinrichtung 1 hat gemäß dem Grundriss des Erdgeschosses in Figur 1 ein Regalsystem mit einer Vielzahl von Regalen 2, von denen in den Figuren 1 und 2 beispielhaft lediglich die Regale 2a, 2b, 2c mit Bezugszeichen versehen sind. Jedes dieser Regale 2 hat eine Vielzahl von Regalfächern 4 zur Aufnahme von Tablaren, die im Folgenden näher beschrieben werden. Jedes dieser Tablare trägt in der Regel ein sortenreines Gebinde derjenigen Waren, die in der erfindungsgemäßen Kommissioniereinrichtung 1 zwischengepuffert werden sollen.

Die Regale 2 sind parallel zueinander angeordnet, wobei zwischen benachbarten Regalen, beispielsweise den Regalen 2a, 2b jeweils Fahrräume 6 verbleiben, in denen jeweils ein oder mehrere Transportshuttles 8a, 8b verfahrbar sind. D. h., diese Transportshuttle 8 bewegen sich parallel zu den jeweiligen Regalen 2. Quer zu den Regalen 2 verfahrbar sind in jeder Ebene (EG, OG) Querwagen 10 bzw. 12 (siehe Figur 3) geführt. Diese Querwagen 10, 12 sind entlang von Schienen 14 (siehe Figur 1) verfahrbar. Diese Schienen 14 sind jeweils am Boden der jeweiligen Ebene befestigt.

Aus dem Schnitt B-B gemäß Figur 3 erkennt man, dass bei der beschriebenen Kommissioniereinrichtung 1 in jeder Ebene (EG, OG) sechs Querwagen 10 bzw. 12 schienengeführt sind. Wie erwähnt, verlaufen diese Schienen 14 quer zur Längserstreckung der Regale 2 im Erdgeschoss bzw. 2' im Obergeschoss. Der Fahrweg der Querwagen 10, 12 erstreckt sich dabei unterhalb der Regalfächer 4c des Regals 2 bzw. der Regalfächer 4c' des Regals 2'. Dabei können im Bereich der Verfahrwege der Querwagen 10 bzw. 12 im Regalsystem Regalfächer entfernt werden, um Platz für die Querwagen 10, 12 und deren Schienen 14 zu schaffen, so dass seitlich von diesen Verfahrwegen Regalfächer 14a, 14b (siehe Figur 3) vorhanden sind. Im Erdgeschoss sind keine derartig seitlich benachbarten Regalfächer 14a, 14b vorhanden, so dass der gesamte bodenseitige Bereich des Regals 2 ohne Regalfächer ausgeführt ist.

Gemäß dem Schnitt A-A in Figur 4 ist die Obst- und Gemüsehalle in ein Erdgeschoss EG und ein Obergeschoss OG geteilt. Die Regale 2 können sich dabei über beide Ebenen erstrecken oder es können zwei Regalsysteme 2, 2' vorgesehen sein, wobei das oben liegenden Regalssystem 2' an einer Zwischendecke 16 abgestützt sein kann. Die in Figur 1 sichtbaren Regale 2 sind am Boden 18 der Obst- und Gemüsehalle abgestützt. In den Fahrräumen 6, 6' zwischen den Regalen 2, 2' im EG bzw. OG sind, wie anhand Figur 1 erläutert, jeweils zwei Transportshuttles 8 bzw. 8' verfahrbar. Über diese Transportshuttles 8, 8' kann, wie im Folgenden noch näher erläutert wird, jedes Regalfach 4, 4' der benachbart zu den Fahrräumen 6, 6' angeordneten Regale 2, 2' erreicht werden.

Im Schnitt A-A sind auch Querwagen 10, 12 sichtbar, die entlang der jeweiligen Schienen 14, 14' im jeweiligen Geschoss quer zu den Regalen 2, 2' verfahrbar sind.

Prinzipiell ist es auch möglich, anstelle der beiden dargestellten Ebenen mit den Regalen 2, 2' ein durchgehendes Regal vorzusehen, das dann über ein bodenseitiges Querwagensystem und über Transportshuttles 8 bedient werden kann, die über die gesamte Regalhöhe, d. h., über beide Ebenen verfahrbar sind. Die in den Figuren 1 bis 4 dargestellte Aufteilung in zwei Geschossebenen mit jeweils einem Querwagen- und Transportshuttlesystem ermöglicht jedoch einen deutlich schnelleren und flexibleren Warenumschlag.

Wie des Weiteren Figur 4 entnehmbar ist, ist die Obst- und Gemüsehalle in zwei Temperaturbereiche getrennt, wobei mit dem Bezugszeichen 20 ein Tieftemperaturbereich mit einer Temperatur von 4°C und mit dem Bezugszeichen 22 ein Temperaturbereich mit einer Solltemperatur von etwa 14°C bezeichnet ist. Die beiden Bereiche 20, 22 sind vorzugsweise gegeneinander isoliert und mit jeweils eigenen Transportshuttin 8 und Querwagen 10, 12 ausgeführt. Prinzipiell ist es selbstverständlich auch möglich, die Querwagen 10, 12 durchgängig über beide Bereiche 20, 22 zu verfahren.

Der Wareneingang und der Warenausgang erfolgt über Entladestationen und Palettierstationen, die sich über die beiden Geschossebenen erstrecken.

Üblicher Weise werden die Waren auf bis zu 2,3 m hohen Paletten (Euro- oder Industriepaletten) in kartonierten Obst-, Salat- und Gemüsesteigen, Bananenkisten oder 600 x 400 mm großen Kunststoffbehältern angeliefert. Nach dem Wareneingang werden diese Quellpaletten auf Wareneingangsspuren 24, 26 (siehe Figur 1) aufgestellt und kontrolliert. Anschließend erfolgt eine manuelle Palettenentsicherung in einer Entsicherungsstation 28, 30. Die Paletten werden dann jeweils automatischen Entladern 32, 34 zugeführt. Diese haben einen Lift, über den die beladenen Quellpaletten in den Bereich des Obergeschosses angehoben werden und dort nach dem Aufrollprinzip depalettiert werden. Die nach dem Depalettieren vorhandenen Leerpaletten werden wieder zurück ins Erdgeschoss gefördert, ggf. gereinigt und in Palettenmagazinen 36, 38 nach Sorten sortiert gelagert. Diese Palettenmagazine 36, 38 können mittels eines allen Be- und Entladestationen gemeinsamen Querförderers 40 angefahren werden. Die Palettenmagazine 36, 38 und der Querförderer 40 befinden sich gemäß Figur 1 im Erdgeschoss.

Das eigentliche Depalettieren erfolgt, wie erwähnt, im Obergeschoss. Die angehobenen Quellpaletten werden dort nach dem Abrollprinzip depalettiert und an Tablare 42 übergeben. Die Tablare 42 werden aus einem Tablarmagazin zugeführt beziehungsweise nach der Kommissionierung leer in dieses zurückgefördert. Die mit der jeweiligen Ware (sortenreines Gebinde) beladenen Tablare 42 werden dann über eine zentrale Fördereinrichtung 44 von den Entladestationen 32, 34 weg hin zu einer Übergabestation 46 gefördert, in der sie über geeignete Handlingsgeräte, beispielsweise Gabeln, Zugmittel, Förderketten etc. an die schienengeführten Querwagen 10, 12 übergeben werden. Diese Übergabestation 46 ist dabei so ausgebildet, dass sowohl die im Erdgeschoss als auch die im Obergeschoss geführten Querwagen 10, 12 mit Volltablaren beladen werden können. So kann die Übergabestation 46 mit einem Lift ausgeführt sein, über den die Tablare 42 zwischen den jeweiligen Ebenen bewegbar sind und in Zwischenspeichern 48 (Figur 4) zwischengelagert werden können.

Die beladenen Tablare 42 (Volltablare) werden dann mittels der Übergabestation 46 an die vom elektronischen Lagermanagement vorbestimmten Querwagen 10, 12 übergeben und entlang der Schienen 14 zu einem vorbestimmten Regal 2 gefördert, wobei die Transportrichtung quer zur Längserstreckung der Regale 2 erfolgt. Das Volltablar wird dann vom Querwagen 10, 12 in der im Folgenden beschriebenen Weise an ein Übergabe-Regalfach 4c (Erdgeschoss) bzw. 4c' (Obergeschoss) (siehe Figur 3) übergeben. Dieses Übergabe-Regalfach 4c, 4c' kann oberhalb, unterhalb, oder benachbart (Ansicht nach Figur 3) zum Fahrweg des jeweiligen Querwagen 10, 12 angeordnet sein. Das betreffende Übergabefach 4c, 4c' kann dann mittels eines vorbestimmten Transportshuttles 8 angefahren werden, um das Volltablar in das vorbestimmte Regalfach 4 des betreffenden Regals 2 zu verfahren.

Nach erfolgter Disponierung und Festlegung der Sequenzierung werden die zwischengepufferten Volltablare wieder in entsprechender Weise mittels der Transportshuttle 8 bzw. Querwagen 10, 12 aus den Bereichen 20, 22 der Obst- und Gemüsehalle entnommen und in der Übergabestation 46 zwischengelagert. Von der Übergabestation 46 werden die beladenen Tablare 42 dann in der entsprechenden Sequenz Handpalettierstationen 50, 52, 54, 56 zugeführt. Dort wird von einem Mitarbeiter die stückzahlgerechte Entladung des Tablars 42 durchgeführt und auf eine Palette geschoben, die aus den oben beschriebenen Palettenmagazinen 36, 38 entnommen wurde. Diese stückzahlgerechte Entladung des Tablars 42 erfolgt noch im Obergeschoss. Die derart beladene Palette fährt dann mittels eines in die Handpalettierstation 50, 52, 54, 56 integrierten Liftes nach unten in das Erdgeschoss und wird dort mittels eines integrierten Folienwicklers 58, 60, 62, 64 transportgesichert und dann über Warenausgangsspuren 66, 68, 70, 72 zum Warenausgang gefördert. Das leere Tablar 42 wird, wie erwähnt, ins Tablarlager zurückgefördert.

Prinzipiell können die Wareneingangsspuren nach dem Wareneingang auch als Warenausgangsspuren genutzt werden. In der Regel werden die Waren innerhalb eines Tages umgeschlagen. Es verbleiben allenfalls einige Restvolltablare 42 in den Regalen 2, die für den nächsten Kommissioniertag stehen bleiben.

Bei dem beschriebenen Ausführungsbeispiel sind des Weiteren noch eine Abgabespur 74 und eine Aufgabespur 76 für Leerpaletten vorgesehen, die mit dem Querförderer 40 in Wirkverbindung stehen.

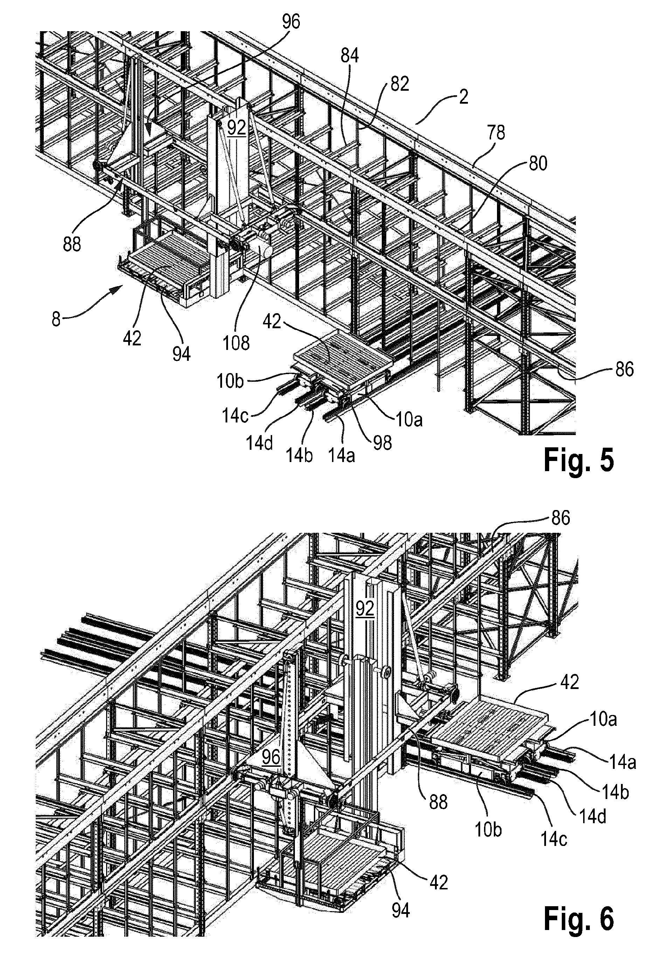

Der Aufbau der Transportshuttle 8 und der Querwagen 10 wird im Folgenden anhand der Figuren 5 bis 8 erläutert.

Die Figuren 5 und 6 zeigen zwei 3D-Detailansichten der erfindungsgemäßen Kommissioniereinrichtung 1. Dargestellt ist dabei ein Teil eines Regals 2 des Regalsystems mit einem Transportshuttle 8 und Querwagen 10a, 10b. Das Regal 2 ist in Metallbauweise als Rahmenkonstruktion ausgeführt, wobei eine Vielzahl von Längsträgern 78, 80 über Vertikalträger 82 und Fachträger 84 sowie Diagonalträger fachwerkartig verbunden sind. Die Tablare liegen auf jeweils zwei benachbarten Fachträger 32 auf. Die Zuführung der Tablare 42 erfolgt in der vorbeschriebenen Weise über die Querwagen 10, 12 zum jeweiligen Regal 2 und über die Transportshuttles 8, 8' in die unterschiedlichen Ebenen dieses Regals 2. Die beidseitig eines Fahrraums 6 (siehe Figuren 1, 2) angeordneten Regale 2 sind sowohl im Erdgeschoss als auch im Obergeschoss jeweils durch an Längsträgern 78, 80 befestigte Führungsschienen 86 geführt, die dem entsprechend beidseitig des jeweiligen Fahrraums 6 angeordnet sind. Zwei dieser Führungsschienen sind in Figur 1 ebenfalls beispielhaft mit den Bezugszeichen 86, 88 versehen.

Das Transportshuttle 8 hat ein Fahrgestell 88, das entlang den Führungsschienen 86, 88 geführt ist, so dass das Transportshuttle 8 entlang des Fahrwegs 6 in Längsrichtung der jeweiligen benachbarten Regale verfahrbar ist. Das Anfahren der unterschiedlichen Regalebenen erfolgt durch Ansteuerung eines Teleskopmastes 92, der geeignete Lastaufnahmemittel 94 zum Halten und übernehmen/übergeben des Tablars 42 trägt.

Bei dem in Figur 5 dargestellten Ausführungsbeispiel des Transportshuttles 8 ist parallel zum Teleskopmast 92 noch ein Führungs-Teleskopmast 96 vorgesehen, der sich parallel zum elektromotorisch oder hydraulisch verstellbaren Teleskopmast 92 erstreckt und am Rahmen des Fahrgestells 88 befestigt ist, so dass das Lastaufnahmemittel 94 beidseitig geführt ist.

Bei dem beschriebenen Ausführungsbeispiel wird ein Tablar 42 von zwei Querwagen 10a, 10b getragen, die jeweils mit einem geeigneten Lastaufnahmemittel 98 ausgeführt sind. Beide Querwagen 10a, 10b sind jeweils auf Schienen 14a, 14b bzw. 14c, 14d geführt. Wie erläutert, erstrecken sich diese Schienen 14 quer zur Längserstreckung der Regale 2 durch freigehaltene Bereiche dieser Regale 2 hindurch, so dass jedes Übergaberegalfach 4 anfahrbar ist.

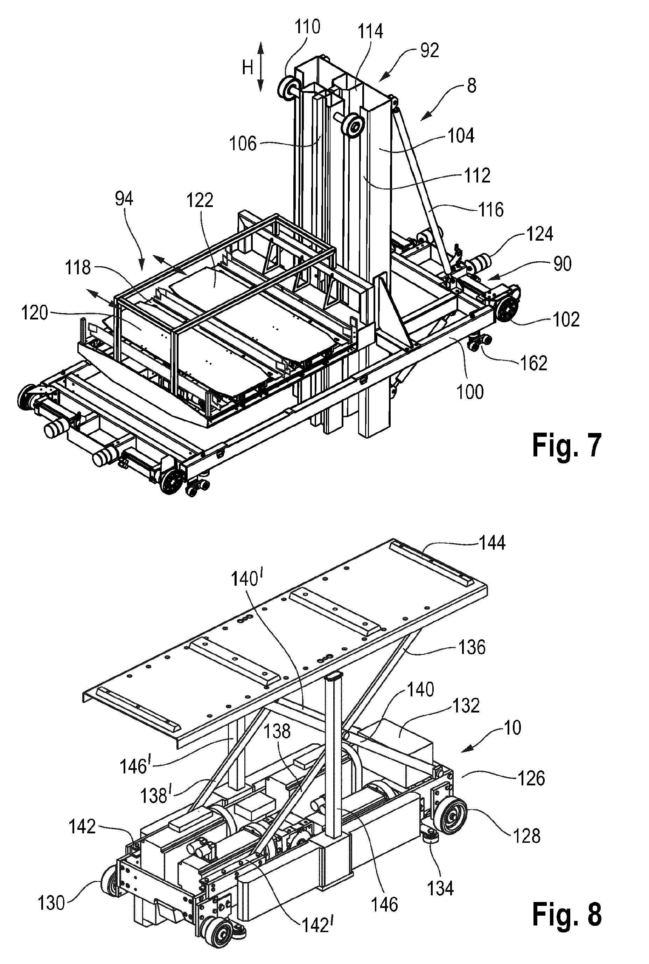

Einzelheiten der Transportshuttle 8 und der Querwagen 10, 12 werden anhand der Figuren 7, 8 erläutert. Figur 7 zeigt eine Einzeldarstellung eines Transportshuttles 8, bei dem der Führungsteleskopmast 96 (Figur 5) weggelassen ist. Dies kann dann erfolgen, wenn die zu transportierenden Lasten relativ gering ist oder der Teleskopmast 92 entsprechend steif ausgeführt ist.

Gut sichtbar in Figur 7 ist das Fahrgestell 90 mit einem etwa rechteckförmigen Tragrahmen 100 an dessen vier Eckbereichen jeweils eine Rolle 102 angeordnet ist, die auf den Führungsschienen 86, 88 abrollen. Am Tragrahmen 100 ist der Teleskopmast 92 abgestützt, dieser hat einen fest stehenden Führungsmast 104, an dem ein Hubmast 106 in Vertikalrichtung ausfahrbar geführt ist. Der Antrieb des Hubmastes 106 erfolgt über einen in Figur 5 sichtbaren elektromotorischen Antrieb 108. Die Führung des Hubmastes 106 am Führungsmast 104 erfolgt zum Einen über Führungsrollen 110, die an entsprechenden Führungsflächen 112 des Führungsmastes 104 abrollen und darüber hinaus über eine Mastschiene 114.

Wie insbesondere aus den Figuren 5 und 7 ersichtlich, ist der Führungsmast 104 rückseitig zusätzlich über Streben 116 am Fahrgestell 100 abgestützt. Der Hubmast 100 trägt das oder die Lastaufnahmemittel 94. Beim konkreten Ausführungsbeispiel ist am Hubmast 100 ein Lastportal 118 gehalten, an dem zwei parallel oder individuell steuerbar ausfahrbare Gabeln oder schwertartige Tragelemente 120, 122 geführt sind, die in Pfeilrichtung ein- und ausfahrbar sind, um die Tablare 42 ans jeweilige Regalfach 4 zu übergeben oder von diesem aufzunehmen. Mit anderen Worten gesagt, die Lastaufnahmemittel werden in den Bereich zwischen zwei benachbarten Fachträgern 34 eines Regalfachs 4 ausgefahren, um das Tablar 42 abzulegen oder zu entnehmen, wobei das Anheben und Ablegen durch einen kleinen Hub des Hubmastes 106 erfolgt.

Prinzipiell können anstelle der ausfahrbaren schwertförmigen Tragelemente 120, 122 auch Rollenförderer oder dergleichen vorgesehen werden, um die Tablare 42 zu übergeben.

Der Hub H (Figur 7) des Teleskopmastes 92 ist so ausgelegt, dass jedes Regalfach 4 eines Regals 2 in Vertikalrichtung anfahrbar ist. Da beim beschriebenen Ausführungsbeispiel jeder Ebene (EG, OG) zweier benachbarter Regale zumindest ein Transportshuttle 8 zugeordnet ist, müssen diese dementsprechend ausgelegt sein, um lichte Höhe der jeweiligen Ebene abdecken zu können. In dem Fall, in dem über die Transportshuttles beide Ebenen anfahrbar sein sollen, muss dementsprechend der Hub doppelt so groß ausgelegt sein.

Das Verfahren des Transportshuttles 8 entlang der Führungsschienen 86, 88 erfolgt durch Antreiben der Rollen 102. Dieser Antrieb kann beispielsweise über einen oder mehrere Elektromotoren 124 erfolgen. Zusätzlich zu den vier Rollen 102 des Fahrgestells 90 sind zum vermeiden eines Abhebens des Fahrgestells 90 von den Führungsschienen 86, 88 Rückhalterollen 162 vorgesehen, die die Führungsschienen 86, 88 untergreifen.

Figur 8 zeigt eine Einzeldarstellung eines Querwagens 10, der entlang der quer zur Längsachse der Regale 2 verlegten Schienen 14 verfahrbar ist. Jeder Querwagen 10, 12 hat einen entlang der Schienen 14 geführten Wagen 126, der mit vier Laufrädern 128, 130 ausgeführt ist, von denen der Einfachheit halber lediglich zwei mit Bezugszeichen versehen sind. Die in Figur 8 rechts angeordneten Laufräder 130 haben einen größeren Durchmesser als die Laufräder 130 der anderen Achse. Die Laufräder 128 sind über einen elektromotorischen Antrieb 132 angetrieben. Zur seitlichen Führung ist der Wagen 126 zusätzlich noch mit Führungsrollen 136 versehen.

Auf dem Wagen 126 ist ein Scherenhubtisch 136 abgestützt, dessen Scherenstreben 138, 140, 138', 140' mittels eines geeigneten Antriebs in eine Streckstellung bringbar sind. Beim dargestellten Ausführungsbeispiel sind die von rechts oben nach links unten (Figur 8) verlaufenden Streben 138 mit ihrem wagenseitigen Endabschnitt entlang Führungen 142, 142' geführt und über einen geeigneten Linearantrieb, beispielsweise eine schubsteife Kette, einen Zylinder oder dergleichen verfahrbar, um den Scherenhubtisch 136 aus- oder einzufahren. Tablarseitig ist der Scherenhubtisch 136 mit einem Lastaufnahmemittel, beispielsweise einer Tragplatte 144 ausgeführt, auf der das jeweilige Tablar 42 zumindest abschnittsweise abgestützt ist. Diese Tragplatte 144 kann durch Ansteuerung des Scherenhubtischs 136 zum Übergeben/Aufnehmen eines Tablars 42 angehoben bzw. abgesenkt werden.

Bei dem in Figur 8 dargestellten Ausführungsbeispiel ist die Tragplatte 144 zusätzlich über vertikale Führungssäulen 146 geführt.

Dieser Querwagen ersetzt somit einen aufwendigen Rollen- oder Bandförderer.

Prinzipiell ist es jedoch auf vorstellbar, anstelle der Querwagen derartige Rollenoder Bandförderer vorzusehen und dann über geeignete Handlingsmittel eine Übergabe an die Übergabe-Regalfächer zur realisieren. Die Verteilung kann dann wiederum über ein Transportshuttle 8 erfolgen.

Wie erläutert, ist die beschriebene Kommissioniereinrichtung zur Zwischenpufferung von Obst und/oder Gemüse vorgesehen. Insbesondere bei Obst kann es vorkommen, dass aufgrund einer unsachgemäßen Handhabung während des Transports oder der Einlagerung Fruchtflüssigkeit aus der Verpackung austritt. Um eine Verschmutzung der Kommissioniereinrichtung 1, insbesondere der Transportshuttle 8 und der Querwagen 10, 12 und deren Führungen zu vermeiden, können Tablare 42 mit einem Dichtrand verwendet werden, wie sie in den Figuren 5, 6 dargestellt sind.

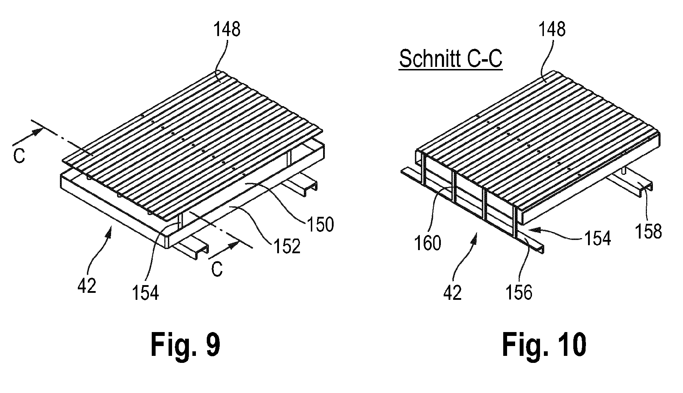

Diese Tablare 42 haben gemäß Figur 9 einen Boden 148, der gemäß den Figuren 5, 6 und Figur 9 in eine geschlossene Wanne 150 mit einem umlaufenden Dichtrand 152 eintaucht (siehe Figuren 5 und 6) so das austretende Flüssigkeit in dieser Wanne 150 gesammelt ist. Der Boden 148 ist mit einer Hubeinrichtung 154 ausgeführt, die es ermöglicht, den Boden 148 aus der in den Figuren 5 und 6 dargestellten Transportposition in eine Übergabe- oder Aufnahmeposition (Figur 9) anzuheben.

Figur 10 zeigt eine Darstellung, bei der das Tablar 42 entlang der Linie C-C in Figur 9 geschnitten ist, so dass ein Teil der Hubeinrichtung 154 sichtbar ist. Dem gemäß hat diese Hubeinrichtung 154 zwei parallel angeordnete Hubleisten 156, 158, an denen jeweils mehrere Hubstempel 160 befestigt sind, die am Boden 148 angreifen. Die Hubleisten 156, 158 lassen sich über eine geeignete Einrichtung, beispielweise Zylinder oder dergleichen in Vertikalrichtung verstellen, um den Boden 148 aus der Wanne 150 auszuheben. Diese Hubeinrichtung kann beispielsweise in die Querwagen 10, 12 oder die Transportshuttle 8 integriert sein oder aber auch am Tablar 42 ausgeführt sein. Prinzipiell können auch die Hubstempel 160 ausfahrbar in den Hubleisten 156, 158 geführt sein.

Bei festen Gütern ist ein derart aufwendiges Tablar 42 nicht erforderlich, so dass dann beispielsweise ein Gitterrosttablar oder dergleichen verwendet werden kann. (Figur 10 erwähnen!)

Die Erfindung wurde vorstehend anhand einer Obst- und Gemüsehalle erläutert. Selbstverständlich ist die Erfindung nicht auf derartige Waren/Güter begrenzt, sondern ist bei allen Waren anwendbar, die in einem Regal oder einer ähnlichen Anordnung zwischengelagert werden sollen.

Offenbart ist eine Kommissioniereinrichtung mit Regalen, die eine Vielzahl von Regalfächern haben. Zur Entnahme oder Übergabe von Waren sind diese Regalfächer der Regale über ein Shuttlefahrzeugsystem anfahrbar. Erfindungsgemäß hat dieses Shuttlefahrzeugsystem zumindest ein Transportshuttle, das entlang der Längsachse der Regale verfahrbar ist. Das Shuttlefahrzeugsystem hat des Weiteren noch Querwagen oder ähnliche Transportmittel, die quer zur Längserstreckung der Regale verlaufen und über die Übergabe-Regalfächer der Regale anfahrbar sind.

### Bezugszeichenliste:

- 1: Kommissioniereinrichtung
- 2: Regal
- 4: Regalfach
- 6: Fahrraum
- 8: Transportshuttle
- 10: Querwagen
- 12: Querwagen
- 14: Schiene
- 16: Zwischendecke
- 18: Boden
- 20: Bereich
- 22: Bereich
- 24: Wareneingangsspur
- 26: Wareneingangsspur
- 28: Entsicherungsstation
- 30: Entsicherungsstation
- 32: Entlader
- 34: Entlader
- 36: Palettenmagazin
- 38: Palettenmagazin
- 40: Querförderer
- 42: Tablar
- 44: Fördereinrichtung
- 46: Übergabestation
- 48: Zwischenspeicher
- 50: Handpalettierstation
- 52: Handpalettierstation
- 54: Handpalettierstation
- 56: Handpalettierstation
- 58: Folienwickler
- 60: Folienwickler
- 62: Folienwickler
- 64: Folienwickler
- 66: Warenausgangsspur
- 68: Warenausgangsspur
- 70: Warenausgangsspur
- 72: Warenausgangsspur
- 74: Abgabespur
- 76: Aufgabespur
- 78: Längsträger
- 80: Längsträger
- 82: Vertikalträger
- 84: Fachträger
- 86: Führungsschiene
- 88: Führungsschiene
- 90: Fahrgestell
- 92: Teleskopmast
- 94: Lastaufnahmemittel
- 96: Führungsteleskopmast
- 98: Lastaufnahmemittel
- 100: Tragrahmen
- 102: Rolle
- 104: Führungsmast
- 106: Hubmast
- 108: elektromotorischer Antrieb
- 110: Führungsrolle
- 112: Führungsfläche
- 114: Mastschiene
- 116: Strebe
- 118: Lastportal
- 120: Tragelement
- 122: Tragelement
- 124: Elektromotor
- 126: Wagen
- 128: Laufrad
- 130: Laufrad
- 132: Antrieb
- 134: Führungsrolle
- 136: Scherenhubtisch
- 138: Scherenstrebe
- 140: Scherenstrebe
- 142: Führung
- 144: Tragplatte
- 146: Führungssäule
- 148: Boden
- 150: Wanne
- 152: Dichtrand
- 154: Hubeinrichtung
- 156: Hubleiste
- 158: Hubleiste
- 160: Hubstempel
- 162: Rückhalterolle

## Patentansprüche

1. Kommissioniereinrichtung mit Regalen (2), die eine Vielzahl von Regalfächern (4) haben und die über ein Shuttlefahrzeugsystem zur Entnahme oder Übergabe von Waren anfahrbar sind, wobei das Shuttlefahrzeugsystem mit die Ware tragenden Lastaufnahmemitteln (94, 96) ausgeführt ist und wobei zwischen parallelen Regalen (2, 2') Fahrräume (6) vorgesehen sind, **dadurch gekennzeichnet, dass** das Shuttlefahrzeugsystem Querfördereinrichtungen, insbesondere Querwagen (10, 12) hat, die quer zu den Regalen (2) und Fahrräumen (6) verfahrbar sind, und über die Übergabe-Regalfächer (4) anfahrbar sind, die zur Übergabe der Ware auch mittels Transportshuttles (8) des Shuttlefahrzeugsystems anfahrbar sind, die im Bereich der Fahrräume (6) geführt sind.

2. Kommissioniereinrichtung nach Patentanspruch 1, wobei mehrere Querfördereinrichtungen, insbesondere Querwagen (10, 12) unterhalb oder in einer Ebene der Regalfächer (4) der Regale (2) parallel zueinander verfahrbar sind.

3. Kommissioniereinrichtung nach einem der vorhergehenden Patentansprüche, wobei die Transportshuttles (8) an benachbarten Regalen (2a, 2b) geführt sind.

4. Kommissioniereinrichtung nach Patentanspruch 3, wobei an den Regalen (2) zwei Führungsschienen (86, 88) für ein Fahrgestell (90) der Transportshuttle (8) angeordnet sind.

5. Kommissioniereinrichtung nach Patentanspruch 4, wobei am Fahrgestell (90) eine Hubeinrichtung für zumindest ein Lastaufnahmemittel (94) angeordnet ist, so dass dieses aus einer durch die Führungsschiene (86, 88) vorgegebenen Ebene in darunter und/oder darüberliegende Regalebenen verfahrbar ist.

6. Kommissioniereinrichtung nach Patentanspruch 5, wobei die durch die Führungsschienen (86, 88) vorgegebenen Regalebene in etwa mittig in Bezug auf die Höhenerstreckung der Regale (2, 2') angeordnet sind.

7. Kommissioniereinrichtung nach Patentanspruch 5 oder 6, wobei die Hubeinrichtung ein Teleskopmast (42) ist, der das Lastaufnahmemittel (84) trägt.

8. Kommissioniereinrichtung nach einem der vorhergehenden Patentansprüche, wobei jeder Querwagen (10, 12) ein Hubelement hat, das ausgelegt ist, um ein Lastaufnahmemittel (98) zumindest zwischen einer Fahrebene des Querwagens und einer benachbarten Regalebene zu bewegen.

9. Kommissioniereinrichtung nach Patentanspruch 8, wobei das Hubelement ein Scherenhubtisch (136) ist.

10. Kommissioniereinrichtung nach Patentanspruch 9, wobei der Scherenhubtisch (136) mittels einer schubsteifen Kette angetrieben ist.

11. Kommissioniereinrichtung nach einem der vorhergehenden Patentansprüche, wobei Waren als misch- oder sortenreines Gebinde auf einem Tablar (42) angeordnet sind.

12. Kommissioniereinrichtung nach Patentanspruch 11, wobei das Tablar (42) einen Dichtrand (152) und eine Einrichtung zum Anheben eines Tablarbodens (148) über den Dichtrand (142) aufweist.

13. Kommissioniereinrichtung nach einem der vorhergehenden Patentansprüche, wobei die Querwagen (10, 12) und/oder Transportshuttles (8) ein oder zwei individuell ansteuerbare Lastaufnahmemittel aufweisen.

14. Kommissioniereinrichtung nach einem der vorhergehenden Patentansprüche, wobei das Lastaufnahmemittel des Querwagens (10, 12) eine Tragplatte (144) für Tablare (42) hat.

15. Kommissioniereinrichtung nach einem der vorhergehenden Patentansprüche, wobei Be- und Entladestationen der Kommissioniereinrichtung mittels der Querwagen (10, 12) anfahrbar sind.

16. Kommissioniereinrichtung nach einem der vorhergehenden Patentansprüche, wobei die Querwagen (10, 12) schienengeführt sind.
